**Europäisches Patentamt**

**European Patent Office**

**Office européen des brevets**

(19)

(11) Veröffentlichungsnummer: **0 104 540**
A2

(12) # EUROPÄISCHE PATENTANMELDUNG

(21) Anmeldenummer: 83109052.7

(22) Anmeldetag: 14.09.83

(51) Int. Cl.³: **C 09 D 3/00**
C 08 K 7/02, C 08 F 299/02

(30) Priorität: 25.09.82 DE 3235610

(43) Veröffentlichungstag der Anmeldung:
04.04.84 Patentblatt 84/14

(84) Benannte Vertragsstaaten:
AT BE CH DE FR GB IT LI NL SE

(71) Anmelder: BAYER AG
Konzernverwaltung RP Patentabteilung
D-5090 Leverkusen 1 Bayerwerk(DE)

(72) Erfinder: Fuhr, Karl, Dr.
Krüllsdyk 55
D-4150 Krefeld 1(DE)

(72) Erfinder: Freier, Hans-Joachim, Dr.
Campendonkstrasse 5
D-4150 Krefeld 1(DE)

(54) Strahlenhärtbares Grundiermittel und seine Verwendung.

(57) Die Erfindung betrifft strahlenhärtbare Grundiermittel auf der Basis von (Meth)Acryloylgruppen enthaltenden Präpolymeren und üblichen Hilfsstoffen. Die Grundiermittel sind gekennzeichnet durch einen Gehalt an organischen und/oder anorganischen Fasern, deren Faserlängen-Verteilungskurve im Bereich von 50 bis 600 μm ihr Maximum aufweist. Sie sind zum Beschichten von Formkörpern mit saugfähigen Untergründen geeignet, insbesondere zum kontinuierlichen Beschichten von Holzbetonformkörpern, wie Holzbetonplatten.

EP 0 104 540 A2

BAYER AKTIENGESELLSCHAFT        5090 Leverkusen, Bayerwerk

Zentralbereich
Patente, Marken und Lizenzen   Fr-klu/c

Strahlenhärtbares Grundiermittel und seine Verwendung

Die Erfindung betrifft strahlenhärtbare Grundiermittel auf der Basis von (Meth)Acryloylgruppen enthaltenden Präpolymeren und üblichen Hilfsstoffen. Die Grundiermittel sind gekennzeichnet durch einen Gehalt an organischen und/oder anorganischen Fasern, deren Faserlängen-Verteilungskurve im Bereich von 50 bis 600 µm ihr Maximum aufweist. Sie sind zum Beschichten von Formkörpern mit saugfähigen Untergründen geeignet, insbesondere zum kontinuierlichen Beschichten von Holzbetonformkörpern, wie Holzbetonplatten.

Es ist bekannt, (Meth)Acryloylgruppen enthaltende Präpolymere in Kombination mit reaktiven Verdünnern wie Mono-, Di- und Tri-(methacrylaten von ein- bis dreiwertigen Alkoholen, einem Ketonharz, einem Photoinitiator, einem Sensibilisierungsmittel und gegebenenfalls Pigmenten, Füllstoffen und weiteren Hilfsmitteln als photopolymerisierbares Überzugsmittel für Baumaterialien wie Asbestzement-Calciumsilikat-Platten, Asbestschieferplatten, Tonplatten, Mörtelzement usw. einzusetzen. Die nach der Härtung erhaltenen Überzüge sollen beständig gegen Lösungsmittel und Wasser sein, ein gefälliges Aussehen und Antiverschmutzungseigenschaften

Le A 21 955 - Europa

besitzen. Diese vorteilhaften Eigenschaften sollen durch das mitverwendete Ketonharz bedingt sein (vergl. DE-PS 29 37 266 = US-PS 4 295 947).

Es ist weiter bekannt, (Meth)Acryloylgruppen enthaltende Präpolymere, gegebenenfalls in Abmischung mit copolymerisierbaren Monomeren, durch ionisierende Strahlen, z.B. Elektronenstrahlen, zu härten (vergl. US-PS 3 770 602; DE-AS 20 03 820 = GB-PS 1 286 591; DE-AS 23 39 509 = US-PS 3 971 711; DE-AS 23 43 085 = US-PS 4 094 925; DE-OS 22 49 446 = US-PS 3 948 739; DE-OS 28 15 721 = US-PS 4 108 840).

Als Baustoff ist ferner Holzbeton bekannt, der aus mineralisierten organischen Zuschlagstoffen (z.B. mit Kalkmilch behandelte Holzspäne), Zement und Wasser zum Abbinden hergestellt wird. Holzbeton hat eine Dichte von etwa 0,4 bis 1,5 g/cm$^3$ und besitzt ein hohes Wärmeisolationsvermögen, eine außergewöhnliche Wasserfestigkeit und hohe Druckelastizität, kann leicht mechanisch bearbeitet werden durch Sägen, Bohren, Nageln, Feilen, Schneiden, Fräsen und dergleichen und ist gegen Feuer widerstandsfähig (vergl. Ullmanns Enzyklopädie der technischen Chemie, 3. Auflage (1953), Bd. 4, Seiten 232 - 233, Verlag Urban und Schwarzenberg, München-Berlin). Holzbetonformkörper wie Platten, Tafeln, Blöcke, Stäbe, Rohre, insbesondere plane, gewölbte oder gewellte Platten (Dicke: vorzugsweise 0,3 bis 10 cm, Breite: vorzugsweise bis 1,50 m und Länge: vorzugsweise (bis 3 m) werden als Fertigteile für den Innen- und Außenbau eingesetzt.

Le A 21 955

Die Holzbetonformkörper besitzen, gleichgültig, ob geschliffen oder ungeschliffen, eine relativ grobe und rauhe, saugfähige Oberfläche, und dies umso mehr, je geringer ihre Dichte ist. Um die Anwendungsmöglichkeiten und die Gebrauchstüchtigkeit dieser Formkörper zu erhöhen und auch, um ihnen ein für das ästhetische Empfinden gefälliges Aussehen zu geben, werden die Holzbetonformkörper mit Überzügen versehen.

Dem Fachmann ist es bekannt, für die Beschichtung von Holzbetonplatten (Meth)Acryloylgruppen enthaltende Präpolymere in Kombination mit üblichen Hilfsmitteln einzusetzen und die Härtung mittels Elektronenstrahlen vorzunehmen. Vorzugsweise wird die Beschichtung aus Wirtschaftlichkeitsgründen auf kontinuierlich arbeitenden Lackieranlagen (Walzlackier- oder Gießmaschine) vorgenommen. Wegen der groben und rauhen, saugfähigen Oberfläche der Holzbetonplatten sind mindestens zwei aufeinanderfolgende Grundierungen und Härtung praktisch jeder Grundierschicht sowie Glätten der gehärteten Grundierungen erforderlich, um die Saugfähigkeit der Holzbetonplatten möglichst zu beseitigen und Löcher und Spalten in der Oberfläche auszugleichen. Anschliessend wird eine strukturierte Deckschicht, vorzugsweise kontinuierlich, aufgetragen und gehärtet.

Aufgabe der vorliegenden Erfindung ist es, die Anzahl der Grundierschichten möglichst gering zu halten, ja, wenn möglich, nur eine Grundierschicht und eine Deckschicht aufzutragen und trotzdem eine einwandfreie

Le A 21 955

- 4 -

Lackierung zu erhalten. Grundier- und Deckschicht sollten auch mittels kontinuierlich arbeitender Lackieranlagen applizierbar sein.

Die Aufgabe wurde dadurch gelöst, daß für die Herstellung mindestens einer der Grundierschichten bzw. der Grundierschicht ein Grundiermittel eingesetzt wird, das organische und/oder anorganische Fasern enthält, deren Faserlängen-Verteilungskurve im Bereich von 50 bis 600 µm ihr Maximum aufweist.

Gegenstand der Erfindung ist somit ein strahlenhärtbares Grundiermittel aus (Meth)Acryloylgruppen enthaltenden Präpolymeren und üblichen Hilfsmitteln, dadurch gekennzeichnet, daß das Grundiermittel organische und/oder anorganische Fasern enthält, deren Faserlängen-Verteilungskurve im Bereich von 50 bis 600 µm ihr Maximum aufweist.

Gegenstand der Erfindung sind auch Holzbetonformkörper, beschichtet mit einem strahlengehärteten Überzug aus mindestens einer Grundierschicht und mindestens einer Deckschicht, dadurch gekennzeichnet, daß zur Herstellung der Grundierschicht bzw. der Grundierschichten mindestens ein Grundiermittel verwendet wird, das organische und/oder anorganische Fasern enthält, deren Faserlängen-Verteilungskurve ihr Maximum im Bereich von 50 bis 600 µm hat.

Vorzugsweise besitzen die zu beschichtenden Holzbetonformkörper eine Dichte von 1,0 bis 1,5 g/cm$^3$.

Die in den strahlungshärtbaren Grundiermitteln der Erfindung enthaltenen (Meth)Acryloylgruppen enthaltenden Präpolymeren besitzen mindestens zwei (Meth)Acryloylgruppen, vorzugsweise zwei bis vier Acryloylgruppen, und leiten sich von Polyestern, Polyethern, Polyepoxidverbindungen, aliphatischen Polyolen, Polyurethanen und Vinylpolymerisaten ab. Derartige (Meth)Acrylatpräpolymere sind bekannt und beispielsweise beschrieben in US-PS 2 101 107;
2 413 973; 2 951 758; 3 066 112; 3 301 743; 3 368 900;
3 380 831; 3 455 801; 3 469 982; 3 485 732; 3 530 100;
3 551 246; 3 552 986; 3 628 963; 3 660 145; 3 664 861;
3 689 610; 3 719 521; 3 732 107; 3 782 961; 3 840 369;
3 888 830; 4 033 920; 4 081 492; 4 206 025;
GB-PS 1 006 587; 1 241 823; 1 241 824; 1 321 372;
DE-OS 19 16 499 und 28 53 921.

Bevorzugte (Meth)Acrylatpräpolymere sind Polyester(meth)-acrylate, Polyepoxy(meth)acrylate und Polyurethan(meth)-acrylate.

Als übliche Hilfsmittel enthalten die erfindungsgemäßen Grundiermittel reaktive strahlenhärtbare Monomere oder Mischungen dieser Monomeren. Diese dienen als Verdünnungsmittel für das Präpolymere und/oder zur Variation der mechanischen Eigenschaften, z.B. der Härte, der ausgehärteten Grundierschicht. Derartige reaktive strahlenhärtbare Monomere sind beispielsweise Acryl-

0104540

- 6 -

bzw. Methacrylsäurester, vorzugsweise von ein- bis dreiwertigen, aliphatischen Alkoholen oder von deren Oxalkylierungsprodukten, insbesondere von deren Oxethylierungsprodukten. Im Falle der Oxalkylierungsprodukte sind auf 1 Hydroxylgruppe des jeweiligen ein- oder mehrwertigen Alkohols durchschnittlich 0,8 bis 4 Mol Alkylenoxid, wie Ethylenoxid oder Propylenoxid, vorzugsweise Ethylenoxid, angelagert worden.

Besonders bevorzugt sind als reaktive strahlenhärtbare Monomere die Acrylate der zwei- und dreiwertigen Alkohole bzw. ihrer Oxethylierungsprodukte.

Namentlich seien beispielhaft genannt: Ethylenglykol-di(meth)acrylat, Di(meth)acrylate des Diethylenglykols, Triethylenglykols, Tetraethylenglykols und Pentaethylenglykols; Propylenglykol-di(meth)acrylat; Di(meth)acrylate des Di- bis Pentapropylenglykols; Neopentyl-di(meth)-acrylat; Butandiol-1,4-di(meth)acrylat; Hexandiol-1,6-di(meth)acrylat; Trimethylolpropan-tri(meth)acrylat, Triacrylate des oxethylierten Trimethylolpropans mit einem Oxethylierungsgrad von 2,5 bis 4 gemäß DE-PS 2 651 507.

Im Grundiermittel sind als strahlenhärtbare Komponenten vorzugsweise

20 bis 80 Gew.-% (Meth)Acryloylgruppen enthaltende Präpolymere und

80 bis 20 Gew.-% reaktive strahlenhärtbare Monomere

enthalten.

Le A 21 955

Im Grundiermittel können als Hilfsstoffe 0,001 bis 0,1 Gew.-%, bezogen auf strahlenhärtbare Komponenten, an üblichen Polymerisationsinhibitoren oder Antioxidantien enthalten sein. Derartige Verbindungen sind beispielsweise:

4,4'-Bis-(2,6-di-tert.-butylphenol),
1,3,5-Trimethyl-2,4,6-tris-(3,5-di-tert.-butyl-4-hydroxy-benzyl)-benzol,
4,4'-Butyliden-bis-(6-tert.-butyl-m-kresol),
3,5-Di-tert.-butyl-4-hydroxybenzylphosphonsäurediethylester,
N,N'-Bis-(ß-naphthyl)-p-phenylendiamin,
N,N'-Bis-(1-methylheptyl)-p-phenylendiamin,
Phenyl-ß-naphthylamin,
4,4'-Bis($\alpha$,$\alpha$-dimethylbenzyl)-diphenylamin,
1,3,5-Tris(3,5-di-tert.-butyl-4-hydroxyhydrocinnamoyl)-hexahydro-s-triazin,
Hydrochionon,p-Benzochinon, Hydrochinonmonomethylether,
2,5-Di-tert.-butylchinon, Toluhydrochinon,
p-tert.-Butylbrenzcatechin,
3-Methylbrenzcatechin, 4-Ethylbrenzcatechin,
Chloranil, Naphthochinon, Kupfernaphthenat,
Kupferoctoat, Cu(I)Cl/Triphenylphosphit,
Cu(I)Cl/Trimethylphosphit,
Cu(I)Cl/Trichloroethyl-phosphit
Cu(I)Cl/Tripropylphosphit,
p-Nitrosodimethylanilin.

- 8 -

Weiter können im Grundiermittel als Hilfsstoffe 0,1 bis 5 Gew.-%, bezogen auf strahlenhärtbare Komponenten, an Antiabsetzmittel vorhanden sein, beispielsweise Dimethylstearylamin, Distearylamin, Stearinsäure, Metallstearate ein- bis dreiwertiger Metalle, Stearylalkohol, die entsprechenden Oleylderivate, disperse bis hochdisperse Kieselsäuren, chemisch modifizierte Montmorillonite, aber auch sehr feinteilige Füllstoffe (Korngröße < 20 µm) wie Schwerspat, Kreide, Gips, Talkum und Kaolin, diese in Mengen von 5 bis 50 %, bezogen auf strahlenhärtbare Komponenten.

Sofern das erfindungsgemäße Grundiermittel als alleinige oder zweite Grundierschicht auf die Oberfläche des Formkörpers aufgetragen wird, kann das Grundiermittel noch 15 bis 40 Gew.-%, bezogen auf strahlenhärtbare Komponenten, an Weiß- und/oder Buntpigmenten enthalten. Beispielhaft seien genannt: Titandioxid, Eisenoxide, Chromoxid, Antimonoxid, Mischoxide des Cobalts/Nickels und Mangans, Chromate wie Blei- oder Strontiumchromat, Mennige, Phthalocyaninpigmente, Aluminium- und Kupferbronzen. Die Pigmente können in bekannter Weise mit Füllstoffen wie Kieselsäure, Talkum, Schwerspat, Kreide, Gips, Asbestmehl, Leichtspat verschnitten sein.

In jedem Fall enthält das erfindungsgemäße Grundiermittel anorganische und/oder organische Fasern, die im Bereich von 50 bis 600 µm, vorzugsweise von 50 bis 200 µm der Faserlängen-Verteilungskurve ihr einziges Maximum aufweisen. Der Gehalt an Fasern beträgt 10 bis

Le A 21 955

30 Gew.-%, bezogen auf strahlenhärtbare Komponenten. Als Fasern seien beispielhaft genannt: Glasfasern, Asbestfasern, Kohlenstoffasern, Polyester-, Polyamid-, Polyacrylnitrilfasern, vorzugsweise Glasfasern. Der Durchmesser der Fasern liegt vorzugsweise unter 25 µm, insbesondere bei 10 bis 20 µm.

Das für die Herstellung der Deckschicht einzusetzende Überzugsmittel enthält als Bindemittel vorzugsweise die gleichen strahlenhärtbaren Komponenten wie für das Grundiermittel angegeben, und im gleichen prozentualen Verhältnis. Es enthält jedoch keine organischen und/oder anorganischen Fasern, dafür zwingend die für die alleinige oder zweite Grundierschicht einsetzbaren Pigmente, und zwar 25 bis 100 Gew.-%, bezogen auf strahlenhärtbare Komponenten. Die anderen, für das Grundiermittel angegebenen Hilfsmittel wie Polymerisationsinhibitoren oder Antioxidantien und Antiabsetzmittel können in den gleichen Mengenverhältnissen im Überzugsmittel vorhanden sein. Darüber hinaus kann das Überzugsmittel Mattierungsmittel (z.B. disperse Kieselsäure), Verlaufmittel (z.B. Celluloseester, Oligoacrylate, Siliconöle) lösliche Farbstoffe, UV-Absorber (z.B. Benztriazolderivate gemäß US-PS 3 189 615 oder Benzophenon gemäß US-PS 3 043 709, 3 049 443, 2 693 492, 2 853 521 und 2 777 828) sowie Quencher und Radikalfänger (z.B. sterisch gehinderte Amine gemäß DE-OS 24 17 535 und 24 56 864) in den üblichen Mengen enthalten.

Manchmal kann es vorteilhaft sein, sei es zur Verbesserung der filmbildenden Eigenschaften der Harzmassen

Le A 21 955

oder aber um eine besonders kratzfeste Oberfläche der Schichten zu erhalten, weitere Zusätze zu verwenden. So ist ein Abmischen mit anderen Harztypen, beispielsweise mit gesättigten oder ungesättigten Polyestern durchaus möglich.

Vorzugsweise werden die Harze in Mengen von 1 bis 50 Gew.-%, bezogen auf die polymerisierbaren Komponenten, eingesetzt. Grundsätzlich jedoch sollten nur solche Harze mitverwendet werden und ihre Menge so weit begrenzt werden, daß eine Beeinträchtigung der Reaktivität nicht auftritt. Geeignete, in der Lackindustrie gebräuchliche Lackharze sind in den Lackrohstofftabellen von E. Karsten, 5. Auflage, Curt R. Vincentz Verlag, Hannover, 1972, Seiten 74 - 106, 195 - 258, 267 - 293, 335 - 347, 357 - 366 beschrieben.

Der Auftrag des Grundiermittels bzw. des Überzugsmittels kann diskontinuierlich erfolgen, vorzugsweise jedoch mittels kontinuierlich arbeitenden Walzlackier- oder Gießlackiermaschinen. Die Dicke der einzelnen nassen Grundierschicht beträgt 25 bis 150 µm, die der nassen Deckschicht 10 bis 100 µm.

Im Falle der Beschichtung von Holzbetonformkörpern der Dichte $> 1,2$ g/cm$^3$ genügt eine, gegebenenfalls Pigmente und Füllstoffe enthaltende Grundierschicht und eine Deckschicht. Bei Holzbetonformkörpern der Dichte $< 1,2$ g/cm$^3$ ist es zweckmäßig, nach erfolgter ein-

Le A 21 955

maliger Grundierung eine zweite, gegebenenfalls Pigmente enthaltende Farbgrundierung aufzubringen und dann den Decklack aufzutragen.

Die Härtung erfolgt vorzugsweise mittels ionisierender Strahlung in einem Inertgas, z.B. Stickstoff, vorzugsweise durch Elektronenstrahlen. Sie wird üblicherweise mit einer Strahlendosis von etwa 0,01 bis ca. 20 Megarad (Mrad) ausgeführt. Aus wirtschaftlichen Gründen bevorzugt man kontinuierlich arbeitende Beschichtungsanlagen, deren Strahlungsquellen eine Beschleunigerspannung von 100 bis 500 Kilo-Volt (kV) und Stromstärken von 5 bis zu 80 Milli-Ampère (mA) aufweisen. Der Abstand der Elektronenstrahlenquelle von der zu härtenden Schicht beträgt üblicherweise 10 bis 20 cm. Die mit solchen Anlagen erreichbare Strahlendosis liegt bei 1 bis 50 Mrad. Nach Auftrag der Grundierschicht kann nach Anhärtung (d.h. die Schicht ist staubtrocken und schleifbar) und Glätten der Grundierschicht die Deckschicht aufgetragen und die Beschichtung ausgehärtet werden. Bei Auftrag von zwei Grundierschichten kann die zweite, gegebenenfalls durch lösliche Farbstoffe und/oder Pigmente eingefärbte Grundierschicht auf die noch nasse erste Grundierung aufgetragen, angehärtet, geglättet, mit der Deckschicht versehen und anschließend ausgehärtet werden.

Wie aus den Beispielen und Vergleichsbeispielen im experimentellen Teil der Anmeldung hervorgeht, erlauben die erfindungsgemäßen Grundiermittel ein vereinfachtes und wirtschaftliches Lackierverfahren, das reprodu-

Le A 21 955

zierbare Beschichtungen mit gleichbleibenden Eigenschaften ergibt, die den Holzformkörper vor Belastungen durch Scheuern, Reiben und Schlag bei Transport, Montage und Gebrauch weitgehend schützen und ihm ein gefälliges Aussehen verleihen. Dabei war überraschend, daß bei Ersatz der Fasern im Grundiermittel durch die gleiche Menge eines üblichen Füllstoffes, aber sonst gleicher Arbeitsweise, Grundierungen erhalten werden, die ein teilweises Eindringen des Decklackes in den Holzformkörperuntergrund nicht vermeiden, so daß Beschichtungen mit Kratern und großen Unebenheiten in der Oberfläche erhalten werden.

Die in dem nachfolgenden experimentellen Teil angegebenen Teile und Prozentangaben beziehen sich auf das Gewicht.

Le A 21 955

- 13 -

## EXPERIMENTELLER TEIL

Urethanacrylatpräpolymerer A gemäß Europäischem Patent
Nr. 0 000 890 = US-Patent 4 225 695

29,99 Teile Isophorondiisocyanat werden vorgelegt und
unter Kühlen und Rühren innerhalb von 2 Stunden 2,15
Teile Thiodiglykol zudosiert, wobei die Temperatur von
60°C nicht überschritten werden sollte. Anschließend
werden unter Überleiten von Luft und nach Zugabe von
0,09 Teilen Zinn-II-2-ethylhexoat sowie 0,01 Teilen
Di-tert.-butylhydrochinon 12,55 Teile 2-Hydroxyethylacrylat zudosiert, wobei die Temperatur von 65°C nicht
überschritten werden sollte. Nach Erreichen des NCO-
Wertes von ca. 14 % nach ca. 4 Std. werden 30.24 Teile
oxethyliertes Trimethylolpropan (TMP) aus 1 Mol TMP
und 12 Mol Ethylenoxid zudosiert, wobei 60°C nicht
überschritten werden sollen. Unter Überleiten trockener
Luft wird so lange bei 60°C gerührt, bis der NCO-Wert
< 0,1 % ist. Es wird ein farb- und geruchloses Harz
(Urethanacrylatpräpolymer A) erhalten, das in 24,97
Teilen Hexandiol-1,6-diacrylat gelöst wird.

Epoxyacrylatpräpolymer B gemäß DE-PS 2 534 012
= US-Patent 4 081 492

55,63 Teile Bisphenol-A-bisglycidylether (Epoxidäquivalent 190) wurden in einem 10-1-Dreihalskolben mit
Rührer, Tropftrichter und Rückflußkühler auf 60°C erhitzt. Bei dieser Temperatur wurden 0,89 Teile Monoethanolamin im Zeitraum von 3 Stunden zugegeben. An-

Le A 21 955

schließend werden 0,69 Teile Thiodiglykol (Katalysator) zugesetzt und 13,23 Teile Acrylsäure bei 60°C innerhalb von 2 Stunden und daran anschließend 4,5 Teile Essigsäure innerhalb 30 Min. zudosiert. Es wurde bei 60°C gerührt, bis die Säurezahl 0 (n/10 NaOH/Bromthymol blau) erreicht war und dann mit 0,04 Teilen p-Methoxyphenol und 0,02 Teilen Toluhydrochinon stabilisiert. Nach Verrühren mit 25 Teilen oxethyliertem Trimethylolpropantriacrylat (C) wurde auf Zimmertemperatur abgekühlt.

Es wurde ein Epoxyacrylatpräpolymer erhalten, gelöst 75 %ig in oxethyliertem Trimethylolpropantriacrylat (C).-

## Oxethyliertes Trimethylolpropan-triacrylat C

besitzt einen Oxethylierungsgrad von 3,75 und wird erhalten gemäß DE-PS 2 651 507 = US-Patent 4 180 474, Vorschriften A und B. Der Oxethylierungsgrad gibt die Anzahl der Mole Ethylenoxid pro Mol Trimethylolpropan an.

## Polyesteracrylatpräpolymer D

a. Partiell acryloyliertes oxethyliertes Trimethylolpropan

Es wird ein OH-gruppenhaltiger, Acryloylgruppen enthaltender Partialester hergestellt, indem ein oxethyliertes Trimethylolpropan/ÖH-Zahl 550 (mg KOH/g Substanz), Oxethylierungsgrad ca. 3,75_7 mit Acrylsäure azeotrop verestert wird.

Le A 21 955

925 Teile oxethyliertes Trimethylolpropan werden mit 430 Teilen Acrylsäure, 12 Teilen p-Toluolsulfonsäure, 1 Teil p-Methoxyphenol, 1,2 Teilen Di-tert.-butyl-hydrochinon und 280 Teilen Toluol versetzt und das entstehende Reaktionswasser azeotrop entfernt. Nach Erreichen einer Säurezahl kleiner 3 (mg KOH/g Substanz) wird das Lösungsmittel im Vakuum entfernt und das Produkt einer Klärfiltration unterworfen. Es wird ein OH-gruppenhaltiger, Acryloylgruppen enthaltender Partialester des oxethylierten Trimethylolpropans erhalten, der durchschnittlich eine OH-Zahl (mg KOH/g Substanz) von 105 und eine Säurezahl (mg KOH/g Substanz) von 2 besitzt und durchschnittlich pro Mol eine Hydroxyl- und zwei Acryloylgruppen enthält.

b. Polyester

Durch Schmelzkondensation aus Adipinsäure und Butandiol-1,4 im Molverhältnis 2 : 1 wird ein Polyester der Säurezahl 328 mg KOH/g Substanz hergestellt.

c. Polyesteracrylatpräpolymer D

668 Teile des unter a. hergestellten, partiell acryloylierten Trimethylolpropans und 346 Teile des unter b. hergestellten sauren Polyesters werden in Gegenwart von 10 Teilen p-Toluolsulfonsäure

Le A 21 955

und jeweils 0,4 Teilen p-Methoxyphenol und Di-tert.-butylhydrochinon mit 300 Teilen Toluol als Schleppmittel azeotrop verestert, bis sich kein Wasser mehr abscheidet. Das Schleppmittel wird im Vakuum abdestilliert.

Das erhaltene Polyesteracrylatpräpolymer D weist eine Säurezahl von 5.2 auf und enthält pro Mol durchschnittlich vier Acryloylgruppen. Es wird 75%ig in Hexandiol-1,6-diacrylat gelöst.

Beispiele

Beispiel 1

Auf eine Holzbetonplatte (Dichte: 1,24 g/cm$^3$) werden mit Hilfe einer Walzlackiermaschine 80 g/m$^2$ einer Grundierung folgender Zusammensetzung aufgetragen:

|  | Teile |
|---|---|
| Urethanacrylatpräpolymer A 75%ig in Hexandiol-1,6-diacrylat | 100,0 |
| Oxethyliertes Trimethylolpropan-triacrylat C | 100,0 |
| Hexandiol-1,6-diacrylat | 20,0 |
| Glasfaser, unbeschlichtet, Verteilungs-kurve der Faserlängen hat im Bereich 50 - 200μm ihr Maximum, Glasfaser-durchmesser ca. 14 μm | 50,0 |

Die Viskosität der Zusammensetzung beträgt 2,0 Pa.s bei 20°C.

Die Grundierung wird mittels Elektronenstrahlen in Inertgas (Stickstoff) angehärtet. Die Beschleunigerspannung beträgt 320 kV, der Kathodenstrom 10 mA bei einer Arbeitsbreite von 120 cm und die Transportgeschwindigkeit der Platte 25 m/min. Abstand der Grundierschicht von der Elektronenstrahlquelle 15 cm.

Le A 21 955

Anschließend erfolgt ein Glätten der Oberfläche. Danach werden mittels Walzgießmaschine 80 g/m$^2$ eines Decklacks folgender Zusammensetzung aufgetragen:

|  | Teile |
|---|---|
| Urethanacrylatpräpolymer A 75%ig in Hexandiol-1,6-diacrylat | 100,0 |
| Hexandiol-1,6-diacrylat | 200,0 |
| Titandioxid (Rutiltyp) | 150,0 |
| disperse Kieselsäure (Mattierungs-mittel) | 60,0 |

Die Viskosität des Decklacks beträgt 2,0 Pa.s bei 20°C.

Die Härtung beider Schichten erfolgt mittels Elektronenstrahlen in Inertgas. Die Beschleunigerspannung beträgt 320 kV, der Kathodenstrom 50 mA bei einer Arbeitsbreite von 120 cm und die Transportgeschwindigkeit 25 m/min. Der Abstand von der Elektronenstrahlquelle beträgt 15 cm.

Die Grundierung füllt weitgehend die Unebenheiten der Plattenoberfläche aus und unterbindet ihre ursprünglich vorhandene Saugfähigkeit, so daß die Decklackierung nahezu flächig ist und an keiner Stelle in die Oberfläche eingezogen wird. Eine Kraterbildung in der Deckschicht kann nicht festgestellt werden.

Le A 21 955

Vergleichsversuch 1

Beispiel 1 wird exakt wiederholt, mit der Änderung, daß das Grundiermittel keine Glasfaser enthält. Weiter entfällt die Hexandiol-1,6-diacrylatmenge von 20 Teilen, da auch ohne diesen Zusatz eine Viskosität von 2,0 Pa.s (20°C) erreicht wird.

Nach der Härtung ist an vielen Stellen Kraterbildung zu beobachten, da der Decklack an diesen Stellen durch die Grundierung in die Oberfläche der Holzbetonplatte eingedrungen ist. Die Grundierschicht ist nicht in der Lage, die Saugfähigkeit der Holzbetonoberfläche zu unterbinden.

Vergleichsversuch 2

Beispiel 1 wird exakt wiederholt, mit der Änderung, daß das Grundiermittel 50 Teile unbeschlichtete Glasfasern der durchschnittlichen Faserlänge von 1000 μm (Faserdurchmesser ca. 14 μm) enthält. Bei dieser Faserlänge ist jedoch ein kontinuierlicher und gleichmäßiger Auftrag der Grundierung mittels der Walzlackiermaschine nicht möglich. Am Dosierspalt zwischen Auftrags- und Dosierwalze sowie am Auftragsspalt zwischen Auftragswalze und zu beschichtender Oberfläche der Holzbetonplatte stauen sich teilweise die Glasfasern und agglomerieren unter Verfilzung. Soweit diese verfilzten Agglomerate auf die Plattenoberfläche gelangen, bewirken sie eine ungleichmäßige Beschichtung und ergeben nach der Aushärtung eine unebene Grundierung mit

Le A 21 955

herausragenden verfilzten Glasfaserbüscheln, die auch nach dem Glätten und Decklackauftrag keine einwandfreie Beschichtung ergibt.

Das gleiche Ergebnis wird erhalten, wenn der Auftrag der Grundierschicht mit einer kontinuierlich arbeitenden Gießauftragsanlage erfolgt.

Vergleichsversuch 3

Beispiel 1 wird exakt wiederholt, mit der Änderung, daß die 50 Teile an Glasfasern durch 50 Teile Bariumsulfat der mittleren Korngröße 10 μm (ungefähr entsprechend dem Glasfaserdurchmesser von ca. 14 μm) ersetzt werden. Der Grundierschichtauftrag läßt sich problemlos durchführen, jedoch unterbindet die Grundierschicht die vorhandene Saugfähigkeit der Holzbetonplattenoberfläche nur unvollständig. Der Decklack dringt teilweise durch die Grundierschicht in die Plattenoberfläche ein und ergibt eine mit Kratern durchsetzte unbrauchbare Beschichtung.

Beispiel 2

Beispiel 1 wird exakt wiederholt, mit der Änderung, daß anstelle von 100 Teilen Urethanacrylatpräpolymer A, 75%ig in Hexandiol-1,6-diacrylat, 100 Teile Epoxyacrylatpräpolymer B, 75%ig in oxethyliertem Trimethylolpropantriacrylat C, verwendet wird.

Le A 21 955

Die erhaltene ausgehärtete Beschichtung ist einwandfrei, es konnte keine Kraterbildung im Überzug festgestellt werden.

### Beispiel 3

Beispiel 1 wird exakt wiederholt, mit der Änderung, daß die unbeschlichteten Glasfasern durch mit einem handelsüblichen Polysiloxan beschlichtete Glasfasern gleicher Länge und gleichen Durchmessers ersetzt werden.

Es wird eine einwandfreie Beschichtung entsprechend Beispiel 1 erhalten.

### Beispiel 4

Beispiel 1 wird exakt wiederholt, mit der Änderung, daß die Glasfasern durch Glasfasern ersetzt werden, deren Maximum in der Verteilungskurve der Faserlängen im Bereich von 200 bis 600 µm liegt (Faserdurchmesser ca. 14 µm).

Es wird eine einwandfreie Beschichtung analog Beispiel 1 erhalten.

### Beispiel 5

Eine Holzzementplatte wird wie in Beispiel 1 grundiert. Auf die noch nasse, transparente erste Grundierschicht werden 80 g/m$^2$ einer zweiten, Pigment enthaltenden Farb-

Le A 21 955

- 22 -

grundierung folgender Zusammensetzung mit Hilfe einer
Walzgießmaschine aufgetragen:

| | Teile |
|---|---|
| Urethanacrylatpräpolymer A | |
| 75%ig in Hexandiol-1,6-diacrylat | 100,0 |
| Oxethyliertes Trimethylolpropan- | |
| triacrylat C | 50,0 |
| Hexandiol-1,6-diacrylat | 55,0 |
| Titandioxid (Rutiltyp) | 150,0 |

Die Viskosität der Farbgrundierung beträgt 2,0 Pa.s
bei 20°C.

Die Grundierungen werden gemeinsam, wie in Beispiel 1,
angehärtet und geglättet.

Anschließend werden mit einer Walzlackiermaschine, in
der sich als Auftragswalze eine Moosgummiwalze befindet,
50 g/m$^2$ eines Decklackes folgender Zusammensetzung aufgetragen:

| | Teile |
|---|---|
| Urethanacrylatpräpolymer A, | |
| 75%ig in Hexandiol-1,6-diacrylat | 100,0 |
| Hexandiol-1,6-diacrylat | 160,0 |
| Titandioxid (Rutiltyp) | 150,0 |
| disperse Kieselsäure | 60,0 |

Le A 21 955

Die Viskosität beträgt 4,0 Pa.s bei 20°C.

Die Härtung erfolgt gemeinsam in Inertgas mit Elektronenstrahlen von 320 kV Beschleunigerspannung, von 50 mA Kathodenstrom bei 120 cm Arbeitsbreite und einer Transportgeschwindigkeit von 25 m/min. Der Abstand von der Elektronenstrahlquelle beträgt 15 cm.

Grundierungen und Decklack ergeben eine einwandfreie Lackierung. Durch den Einsatz der Moosgummiwalze ist die Oberfläche strukturiert. Sie genügt in jeder Weise den an sie gestellten Ansprüchen. Alle Unebenheiten der Plattenoberfläche werden überdeckt. Kraterbildungen können nicht festgestellt werden.

Beispiel 6

In diesem Beispiel wird eine Holzbetonplatte mit einer Dichte von 1,15 g/cm$^3$ beschichtet, die eine größere Saugfähigkeit besitzt als die in den vorhergehenden Beispielen und Vergleichsversuchen verwendeten. Daher sind bei dieser Holzbetonplatte zwei Grundierungen, stets mit Glasfaseranteil, erforderlich, während im Beispiel 5 die Farbgrundierung keine Glasfaser zu enthalten braucht.

Die erste Grundierung erfolgt, wie in Beispiel 1 beschrieben.

Auf die nasse, transparente Grundierung werden mittels Walzgießmaschine 80 g/m$^2$ Farbgrundierung folgender Zusammensetzung aufgetragen:

Le A 21 955

- 24 -

|                                                              | Teile |
|--------------------------------------------------------------|-------|
| Urethanacrylatpräpolymer A, 75%ig in Hexandiol-1,6-diacrylat | 100,0 |
| Oxethyliertes Trimethylolpropan-triacrylat C                 | 50,0  |
| Hexandiol-1,6-diacrylat                                      | 60,0  |
| Titandioxid, Rutiltyp                                        | 150,0 |
| Glasfaser, deren Verteilungskurve der Glasfaserlängen im Bereich von 50 - 200 µm ihr Maximum aufweist | 50,0 |

Die Viskosität der Farbgrundierung beträgt 2,0 Pa.s bei 20°C.

Die Grundierungen werden gemeinsam, wie in Beispiel 1, angehärtet und geglättet.

Der Auftrag des Decklackes und gemeinsame Härtung der Schichten erfolgen nach Beispiel 5.

Die fertige, ausgehärtete Lackierung zeigt ein einwandfreies Aussehen. Trotz des bei Holzbetonplatten mit einem spez. Gewicht unter 1,2 $g/cm^3$ verstärkt vorhandenen Saugvermögens wird eine einwandfreie Beschichtung erhalten. Alle Unebenheiten dieser Platte werden einwandfrei überdeckt. Es ist keine Kraterbildung im Überzug zu beobachten.

## Vergleichsversuch 4

Beispiel 6 wird exakt wiederholt, jedoch mit der Änderung, daß in der Farbgrundierung die Glasfasern fortgelassen werden, und die Menge an Hexandiol-1,6-diacrylat auf 30 Tle verringert wird, um ebenfalls eine Viskosität von 2,0 Pa.s bei 20°C zu erhalten.

Der ausgehärtete Überzug weist Krater auf, da der Decklack an vielen Stellen durch die Grundierung in die Plattenoberfläche eingedrungen ist.

Allgemein wurde festgestellt, daß bei Dichten der Holzbetonplatten unter 1,2 g/cm$^3$ zwei, Glasfasern enthaltende Grundierungen erforderlich sind, um alle Unebenheiten, Löcher und Spalten der Platte auszufüllen und eine einwandfreie Beschichtung zu ermöglichen.

## Beispiel 7

Beispiel 6 wird wiederholt, jedoch mit folgenden Änderungen:

1.  Die erste Grundierung enthält anstelle des Urethanacrylatpräpolymers in Hexandiol-1,6-diacrylat die gleiche Menge Epoxyacrylatpräpolymer B, 75%ig in oxethyliertem Trimethylolpropan-triacrylat C.

2.  In der Farbgrundierung ist das Urethanacrylatpräpolymer durch die gleiche Menge Polyesteracrylat C, 75%ig in Hexandiol-1,6-diacrylat, ersetzt worden.

Le A 21 955

Der ausgehärtete Überzug besitzt ein einwandfreies Aussehen. Es kann keine Kraterbildung festgestellt werden.

Beispiel 8

Auf eine Holzbetonplatte (Dichte 1,24 g/cm$^3$) werden mit Hilfe einer Walzlackiermaschine 80 g/m$^2$ der Farbgrundierung des Beispiels 6 aufgetragen.

Die Grundierung wird wie Beispiel 1 angehärtet und geglättet. Der Auftrag des Decklackes und die gemeinsame Härtung der beiden Schichten erfolgen nach Beispiel 5. Die fertige, ausgehärtete Lackierung zeigt ein einwandfreies Aussehen.

Bei Holzbetonplatten mit einem spez. Gewicht über 1,2 g/cm$^3$ reicht eine Grundierung aus (siehe Beispiel 1). Da der mit 50 g/m$^2$ strukturiert aufgetragene Decklack in seinen dünnen Schichten kein ausreichendes Deckvermögen aufweist, muß die Grundierung pigmentiert sein.

Vergleichsversuch 5

Beispiel 8 wird exakt wiederholt, mit der Änderung, daß die Farbgrundierung des Beispiels 6 keine Glasfaser enthält. Die Hexandiol-1,6-diacrylatmenge ist zum Viskositätsausgleich auf 55 Teile zurückgenommen (siehe Grundierung des Beispiels 5). Die Grundierschicht ist jetzt nicht in der Lage, die Saugfähigkeit der Holzbetonoberfläche zu unterbinden. Nach Auftrag und Härtung des Decklackes ist an vielen Stellen Kraterbildung zu beobachten.

Le A 21 955

Patentansprüche:

1. Strahlenhärtbares Grundiermittel aus (Meth)Acryloylgruppen enthaltenden Präpolymeren und üblichen Hilfsmitteln, dadurch gekennzeichnet, daß das Grundiermittel organische und/oder anorganische Fasern enthält, deren Faserlängen-Verteilungskurve im Bereich von 50 bis 600 µm ihr Maximum aufweist.

2. Grundiermittel gemäß Anspruch 1, dadurch gekennzeichnet, daß es 10 bis 30 Gew.-%, bezogen auf strahlenhärtbare Bestandteile, an organischen und/oder anorganischen Fasern enthält.

3. Grundiermittel gemäß Anspruch 1, dadurch gekennzeichnet, daß die Fasern Glasfasern sind.

4. Holzbetonformkörper, beschichtet mit einem strahlengehärteten Überzug aus mindestens einer Grundierschicht und mindestens einer Deckschicht, dadurch gekennzeichnet, daß zur Herstellung der Grundierschicht bzw. der Grundierschichten mindestens ein Grundiermittel gemäß Anspruch 1 verwendet worden ist.

Le A 21 955